# EUROPÄISCHE PATENTSCHRIFT

(11) **EP 0 936 094 B1**
(45) Veröffentlichungstag und Bekanntmachung des Hinweises auf die Patenterteilung: **01.02.2006**
(21) Anmeldenummer: 99100483.9
(22) Anmeldetag: 12.01.1999
(51) Int. Cl.: B60J 7/12

(54) **Faltverdeck für ein Cabrioletfahrzeug**
Soft top for convertible vehicle
Toit pliant pour véhicule convertible

(30) Priorität: 12.02.1998 DE 19805657
(43) Veröffentlichungstag der Anmeldung: 18.08.1999
(73) Patentinhaber: Dr.Ing. h.c.F. Porsche Aktiengesellschaft, 70435 Stuttgart (DE)
(72) Erfinder: Bauer, Dieter, 71229 Leonberg (DE); Pfertner, Kurt, 71229 Wimsheim (DE)

(56) Entgegenhaltungen:
- US-A- 4 626 021

## Beschreibung

Die Erfindung bezieht sich auf ein Faltverdeck für ein Cabrioletfahrzeug nach dem Oberbegriff des Anspruchs 1.

Bei herkömmlichen Faltverdecken wird der Verdeckstoff als ebene Rollenware verarbeitet, der nur in gewissen Grenzen eine Verformung zuläßt. Um die dreidimensionale Form des späteren Verdeckbezugs zu erreichen, muß der komplette Verdeckbezug aus mehreren ebenen Segmenten zusammengesetzt werden, die über Nähte miteinander verbunden sind. Um die Wasserdichtheit zu gewährleisten, müssen die Nähte nachträglich abgedichtet werden.

Aufgabe der Erfindung ist es, an einem Verdeckbezug solche Vorkehrungen zu treffen, daß Verbindungsnähte und Abdichtungsmaßnahmen zumindest stark reduziert werden oder ganz entfallen können, wodurch die Fertigungskosten erheblich verringert werden und zudem eine optische Verbesserung des Verdeckbezugs erzielt wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das thermische Umformen der Verdeckstoffsegmente die Anzahl der Verbindungsnähte sowie die Abdichtmaßnahmen wesentlich reduziert werden können, wodurch die Herstellungskosten gesenkt werden können.

Besonders vorteilhaft ist ein lediglich aus einem einzigen, thermisch umgeformten Verdeckstoffsegment bestehende Verdeckbezug, weil dann vollständig auf Verbindungsnähte und Abdichtvorkehrungen verzichtet werden kann. Das thermische Umformen erfolgt vorzugsweise durch Tiefziehen des Verdeckstoffes. Bei einem mehrschichtigen Verdeckstoff mit einer Zwischenschicht aus Synthesekautschuk erfolgt die thermische Umformung vorzugsweise in einem gemeinsamen Arbeitsgang mit dem Vulkanisieren der Zwischenschicht.

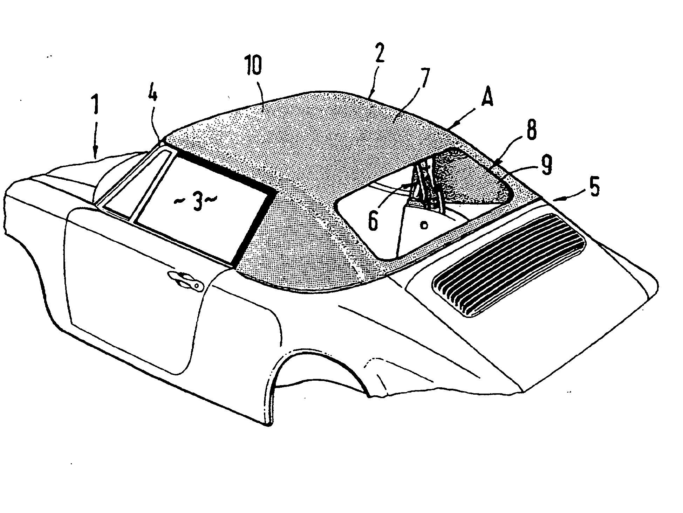

Ein Ausführungsbeispiel der Erfindung ist in der Zeichnung dargestellt und wird im folgenden näher erläutert.

Die einzige Figur zeigt eine perspektivische Ansicht von schräg hinten auf ein Cabrioletfahrzeug 1 mit einem Faltverdeck 2. Das Faltverdeck 2 erstreckt sich in Schließstellung A - den den Fahrgastraum 3 überspannend - vom Windschutzscheibenrahmen 4 bis zu einem Heckbereich 5 und setzt sich aus einem Verdeckgestänge 6 und einem vom Verdeckgestänge 6 getragenen Verdeckbezug 7 zusammen. Der Verdeckbezug 7 weist im hinteren Bereich eine großflächige Ausnehmung 8 für eine Heckscheibe 9 auf, die als starre oder flexible Scheibe ausgebildet sein kann.

Der Verdeckbezug 7 wird vorzugsweise durch ein einziges Verdeckstoffsegment 10 gebildet, das durch thermisches Umformen in eine dreidimensionale, der gewünschten Kontur des Faltverdecks 2 angepaßte Form gebracht wird. Das thermische Umformen des Verdeckbezugs 7 erfolgt vor der Montage des Verdeckbezugs 7 am Verdeckgestänge 6.

Es besteht jedoch auch die Möglichkeit, daß sich der Verdeckbezug 7 aus mehr als einem einzigen Verdeckstoffsegment zusammensetzt, wobei dann mindestens ein Verdeckstoffsegment thermisch umgeformt wird (nicht näher dargestellt). Bei nur einem Verdeckstoffsegment entfallen sämtliche Verbindungsnähte und Abdichtmaßnahmen für die Verbindungsnähte. Das thermische Umformen erfolgt in einem Tiefziehprozeß unter Wärmeeinwirkung.

Im Ausführungsbeispiel besteht der Verdeckstoff aus einem Gewebe mit einem dreischichtigen Aufbau, wobei als Zwischenschicht eine Gummischicht aus Synthesekautschuk vorgesehen ist. Bei einem derartigen Aufbau des Verdeckstoffes ist es denkbar, daß die thermische Umformung des Verdeckbezuges 7 in einem Arbeitsgang mit der Vulkanisation der Zwischenschicht aus Synthesekautschuk erfolgt.

## Patentansprüche

1. Faltverdeck für ein Cabrioletfahrzeug, das sich aus einem Verdeckgestänge und einem vom Verdeckgestänge getragenen Verdeckbezug zusammensetzt, wobei der Verdeckbezug zumindest ein Verdeckstoffsegment umfaßt, **dadurch gekennzeichnet, daß** das zumindest eine Verdeckstoffsegment (10) durch thermisches Umformen in eine dreidimensionale, der Kontur des Faltverdecks (2) angepaßte Form gebracht wird.

2. Faltverdeck nach Anspruch 1, **dadurch gekennzeichnet, daß** der Verdeckbezug (7) lediglich ein thermisch umgeformtes Verdeckstoffsegment (10) umfaßt.

3. Faltverdeck nach Anspruch 1, **dadurch gekennzeichnet, daß** der Verdeckbezug (7) mehrere Verdeckstoffsegmente enthält, wobei zumindest ein Verdeckstoffsegment thermisch umgeformt ist.

4. Faltverdeck nach den Ansprüchen 1 bis 3, **dadurch gekennzeichnet, daß** das zumindest eine Verdeckstoffsegment (10) durch einen Tiefziehprozeß unter Wärmeeinwirkung in seine dreidimensionale Form gebracht wird.

5. Faltverdeck, bei dem der Verdeckbezug durch einen mehrschichtigen Verdeckstoff mit einer Zwischenschicht aus Synthesekautschuk gebildet wird, nach Anspruch 1, **dadurch gekennzeichnet, daß** die thermische Umformung in einem Arbeitsgang mit der Vulkanisation der Zwischenschicht aus Synthesekautschuk erfolgt.

## Claims

1. A folding top for a cabriolet vehicle, which is formed from a folding-top linkage and a folding-top cover supported by the folding-top linkage, wherein the folding-top cover comprises at least one segment of folding-top material, **characterized in that** the at least one segment (10) of folding-top material is put into a three-dimensional form adapted to the profile of the folding top (2) by thermal shaping.

2. A folding top according to Claim 1, **characterized in that** the folding-top cover (7) comprises only one thermally shaped segment (10) of folding-top material.

3. A folding top according to Claim 1, **characterized in that** the folding-top cover (7) contains a plurality of segments of folding-top material, wherein at least one segment of folding-top material is shaped thermally.

4. A folding top according to Claims 1 to 3, **characterized in that** the at least one segment (10) of folding-top material is put into its three-dimensional shape by a deep-drawing process under the action of heat.

5. A folding top, in which the folding-top cover is formed by a multiple-layer folding-top material with an intermediate layer of synthetic rubber, according to Claim 1, **characterized in that** the thermal shaping is carried out in one operating step with the vulcanization of the intermediate layer of synthetic rubber.

## Revendications

1. Capote pliante pour cabriolet, qui se compose d'une tringlerie et d'un revêtement porté par la tringlerie, le revêtement de la capote comprenant au moins un segment, **caractérisée en ce que** le ou les segments (10) de la garniture de la capote sont amenés, par déformation thermique, dans une forme tridimensionnelle, adaptée au contour de la capote pliante (2).

2. Capote pliante selon la revendication 1, **caractérisée en ce que** le revêtement (7) de la capote comprend uniquement un segment (10) déformé thermiquement.

3. Capote pliante selon la revendication 1, **caractérisée en ce que** le revêtement (7) de la capote contient plusieurs segments, au moins un segment du revêtement étant déformé thermiquement.

4. Capote pliante selon les revendications 1 à 3, **caractérisée en ce que** le ou les segments (10) du revêtement de la capote sont amenés par un processus d'emboutissage profond avec action de la chaleur dans leur forme tridimensionnelle.

5. Capote pliante pour laquelle le revêtement est formé par un matériau de capote à plusieurs couches avec une couche intermédiaire en caoutchouc synthétique, selon la revendication 1, **caractérisée en ce que** la déformation thermique s'effectue en une passe avec la vulcanisation de la couche intermédiaire en caoutchouc synthétique.
